# EUROPÄISCHE PATENTSCHRIFT

(11) **EP 1 474 316 B1**
(45) Veröffentlichungstag und Bekanntmachung des Hinweises auf die Patenterteilung: **29.08.2007**
(21) Anmeldenummer: 02785056.9
(22) Anmeldetag: 13.11.2002
(51) Int. Cl.: B60R 21/01

(54) **VORRICHTUNG ZUR ANSTEUERUNG VON EINEM REVERSIBLEN RÜCKHALTEMITTEL**
DEVICE FOR TRIGGERING A REVERSIBLE RESTRAINING MEANS
DISPOSITIF D'ACTIVATION D'UN MOYEN DE RETENUE REVERSIBLE

(30) Priorität: 01.02.2002 DE 10204134
(43) Veröffentlichungstag der Anmeldung: 10.11.2004
(73) Patentinhaber: ROBERT BOSCH GMBH, 70442 Stuttgart (DE)
(72) Erfinder: LICH, Thomas, 71409 Schwaikheim (DE); KUTTENBERGER, Alfred, 71696 Moeglingen (DE)
(86) Internationale Anmeldenummer: PCT/DE2002/004195
(87) Internationale Veröffentlichungsnummer: WO 2003/064217

(56) Entgegenhaltungen:
- EP-A- 0 893 313
- WO-A-01/79039
- DE-A- 19 520 721
- US-A- 5 552 986
- US-A1- 2001 054 816

## Beschreibung

### Stand der Technik

Die Erfindung geht aus von einer Vorrichtung zur Ansteuerung von einem reversiblen Rückhaltemittel nach der Gattung des unabhängigen Patentanspruchs.

Aus der Patentschrift DE 44 11 184 C2 ist es bekannt, dass reversible Rückhaltemittel in Abhängigkeit von einem Signal von einer Umfeldsensierung bei einer wahrscheinlichen Kollision angesteuert werden.

Aus EP 0 893 313 A2 ist es bekannt, das Last- bzw. Kraftbegrenzungsverhalten eines Gurtkraftbegrenzers in Abhängigkeit von Sensorsignalen, insbesondere Insassengewicht, Sitzposition, Unfallschwere und gegebenenfalls Bremspedalbetätigung, einzustellen.

Aus US 6 123 357 A ist es bekannt, dass in Abhängigkeit von der Lage des Kindersitzes die Betätigung eines Gurtstraffers bzw. eines Gurtkraftbegrenzers verhindert oder gestattet wird.

### Vorteile der Erfindung

Die erfindungsgemäße Vorrichtung zur Ansteuerung von einem reversiblen Rückhaltemittel mit den Merkmalen des unabhängigen Patentanspruchs hat demgegenüber den Vorteil, dass das reversible Rückhaltemittel in Abhängigkeit von einem ersten Signal von einer Innenraumsensierung angesteuert wird. Hieraus ergibt sich weiterhin der Vorteil, dass nicht während eines Unfalls oder kurz vor einem Unfall entsprechende Maßnahmen ergriffen werden müssen, sondern schon vorher gemacht wurden und somit das Verletzungsrisiko minimiert werden kann. Im Fall von Kindersitzen kann der Gurtstraffer gezielt betätigt werden, um somit sicherzustellen, dass der Kindersitz richtig gegurtet wird. Weiterhin wird dadurch der Kindersitz bei der Installation im Fahrzeug optimal fixiert. Aber auch andere Objekte oder Personen können so besser fixiert werden. Dies wirkt als Komfortfunktion aber auch um eine optimale Position zu erreichen, die bei einem Unfall das Verletzungsrisiko minimiert.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von einem reversiblen Rückhaltemittel möglich.

Besonders vorteilhaft ist, dass die Innenraumsensierung das erste Signal als eine Insassenklasse bildet. Insassen werden insbesondere nach ihrem Gewicht klassifiziert. Daneben ist es möglich, dass Objekte wie ein Kindersitz einer besonderen Klasse zugeordnet werden. Dies ermöglicht eine gezielte Ansteuerung des reversiblen Rückhaltemittels, also insbesondere eines reversiblen Gurtstraffers.

Weiterhin ist es von Vorteil, dass durch ein zweites Signal von einer Umfeldsensierung die Rückhaltemittel kurz vor einer Kollision des Fahrzeugs angesteuert werden. Damit kann insbesondere direkt vor einem Unfall eine weitere Stufe der Ansteuerung vorgesehen sein.

Darüber hinaus ist es von Vorteil, dass die Vorrichtung mit einem Gurtkraftsensor verbindbar ist und ein drittes Signal von dem Gurtkraftsensor bei der Ansteuerung berücksichtigt. Damit ist es insbesondere möglich, eine Regelung der Gurtstrafferaktuatorik zu erreichen. Daneben können auch andere Aktuatoren angesteuert werden, z.B. Beifahrerfenstertüröffner, Sitzpositionsregler.

Schließlich ist es auch noch von Vorteil, dass die Vorrichtung mit einem Gurtschlosssensor verbindbar ist, der anzeigt, ob das Gurtschloss geschlossen wurde oder nicht. Abhängig davon kann die Ansteuerung des reversiblen Rückhaltemittels, also des Gurtstraffers, erfolgen oder, wenn das Gurtschloss nicht geschlossen wurde, eine Anzeige, dass der Gurt zu schließen ist.

### Zeichnung

Ausführungsbeispiele der Erfindung sind in der Zeichnung dargestellt und werden in der nachfolgenden Beschreibung näher erläutert. Es zeigen:
Figur 1 ein Blockschaltbild der erfindungsgemäßen Vorrichtung und
Figur 2 ein Flussdiagramm, das den Ablauf der erfindungsgemäßen Vorrichtung erläutert.

### Beschreibung

Um einen mehrstufigen Airbag in Abhängigkeit von dem Gewicht des Insassen zu zünden, werden zur Zeit Systeme entwickelt, die mit Hilfe einer im Sitz eingelassenen und aus einer Matrix von druckempfindlichen Sensoren bestehenden Sitzmatte Informationen über das Profil des Insassen liefern. Es sind jedoch auch andere Systeme zur Insassenerkennung und auch zur Gewichtsbestimmung möglich. Damit Rückschlüsse auf das Gewicht möglich sind und diese Daten in einem Sitz verbauten Steuergerät ausgewertet werden können. Das Resultat wird wiederum dem Airbag-Steuergerät geschickt, womit eine angepasste Auslösung möglich ist.

Die an das Airbag-Steuergerät gelieferte Information, welche durch ein Insassenklassifizierungssystem, also einer Innenraumsensierung, gegeben wird, hat zur Zeit Auswirkungen auf das Auslöseverhalten des Airbags, insbesondere welche Stufe eines Airbag bei einem mehrstufigen Airbag zu zünden ist. Im weiteren ist bekannt, dass der Gurtstraffer bei einer entsprechend schweren Person im Fall eines Unfalls stärker angezogen werden kann, beispielsweise durch eine pyrotechnische Zündung. Weiterhin ist bekannt, dass es Systeme gibt, welche mittels einer Mechanik einen Unfall erkennen und durch Trägheit des Insassen die Rückenlehne-Kopfstütze in eine für den Insassen optimale Position bringen.

Erfindungsgemäß wird nun eine Vorrichtung zur Ansteuerung von einem reversiblen Rückhaltemittel, insbesondere einem Gurtstraffer, vorgeschlagen, die mit einer Innenraumsensierung verbindbar ist und in Abhängigkeit von dem ersten Signal der Innenraumsensierung das reversible Rückhaltemittel ansteuert. Durch die Verbindung mit weiteren Sensoren wie einer Umfeldsensierung, einem Gurtkraftsensor und einem Gurtschlosssensor sind Weiterbildungen der erfindungsgemäßen Vorrichtung möglich. Die Innenraumsensierung liefert als das erste Signal die Insassenklasse.

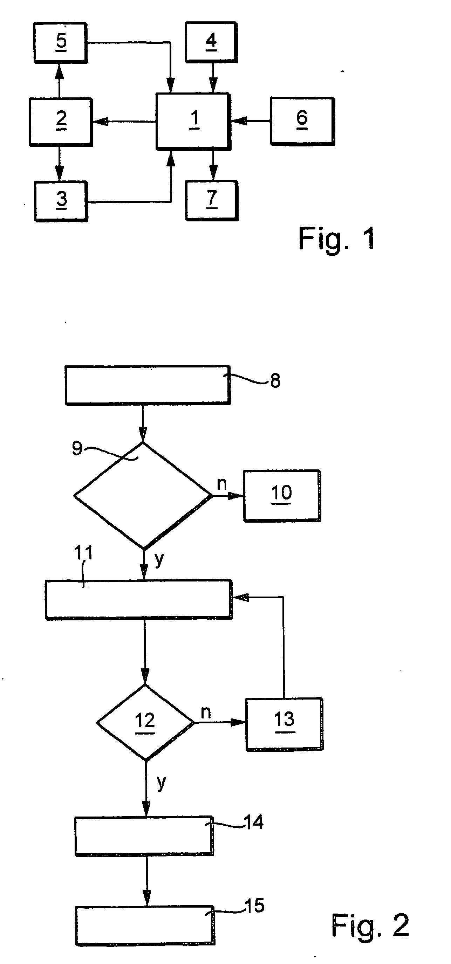

Figur 1 zeigt als Blockschaltbild die erfindungsgemäße Vorrichtung. Ein Prozessor 1 ist über einen Datenausgang mit einem reversiblen Rückhaltemittel 2, hier einem Gurtstraffer, verbunden. Über einen ersten Dateneingang ist der Prozessor 1 mit einem Gurtkraftsensor 3 verbunden. Über einen zweiten Dateneingang ist der Prozessor 1 mit einem Gurtschlosssensor 5 verbunden. Über einen dritten Dateneingang ist der Prozessor 1 mit einer Innenraumsensierung 4 verbunden. Über einen vierten Dateneingang ist der Prozessor 1 mit einer Unfallsensierung 6 verbunden. Das reversible Rückhaltemittel 2 ist über einen ersten Datenausgang mit dem Gurtkraftsensor 3 und über einen zweiten Datenausgang mit dem Gurtschlosssensor 5 verbunden.

Als Innenraumsensierung 4 wird hier eine Sitzmatte verwendet. Durch Auswertung des Sitzprofils ist eine Bestimmung des Gewichts der Person möglich. Auch die Sitzposition an sich ist damit bestimmbar. Alternativ oder ergänzend zu der Sitzmatte mit druckempfindlichen Sensorelementen können Ultraschallsensoren oder Sensoren auf elektromagnetischer Basis oder Videosensoren oder andere Gewichtssensoren eingesetzt werden. Als die Umfeldsensierung 6 können Videosensoren, Radarsensoren, Ultraschallsensoren oder auch ein Laserradar verwendet werden. Über einen zweiten Datenausgang ist der Prozessor 1 mit einer Anzeige 7 verbunden. Diese Anzeige ist im Fahrgast-Innenraum angeordnet und zeigt an, ob ein Sicherheitsgurt verwendet wurde oder nicht. Dazu können bereits im Fahrgastraum vorhandene Anzeigen, beispielsweise für Telematikgeräte, verwendet werden.

Figur 2 zeigt als Flussdiagramm den Ablauf der erfindungsgemäßen Vorrichtung. In Verfahrensschritt 8 wird mit der Innenraumsensierung 4 die Insassenklasse bestimmt. Diese kann sich nach einer Gewichtsschätzung richten, aber auch eine Volumenschätzung ist hier möglich.

In Verfahrensschritt 9 wird festgestellt, ob sich eine Person oder ein Objekt auf dem jeweiligen Sitz befindet. Befindet sich kein Objekt oder eine Person auf dem Sitz, dann wird in Verfahrensschritt 10 das Verfahren abgebrochen. Wurde jedoch ein Objekt oder eine Person auf dem Fahrzeugsitz festgestellt, dann wird in Verfahrensschritt 11 das Signal vom Gurtschlosssensor abgefragt. In Verfahrensschritt 12 wird überprüft, ob dieses Signal anzeigt, dass das Gurtschloss geschlossen ist. Ist das nicht der Fall, dann wird in Verfahrensschritt 13 mit der Anzeige 7 angezeigt, dass der Gurt zu schließen ist und zu Verfahrensschritt 11 zurückgesprungen, um dies zu überprüfen. Wurde jedoch in Verfahrensschritt 12 festgestellt, dass der Gurt geschlossen ist, dann wird in Verfahrensschritt 14 entsprechend der Insassenklasse das Objekt beziehungsweise die Person auf dem Fahrzeugsitz mit dem Gurt entsprechend angesteuert. D.h., es wird eine dem Objekt beziehungsweise der Person entsprechenden Kraft der Gurt angezogen. Dazu werden beispielsweise Elektromotoren verwendet. In Verfahrensschritt 15 erfolgt in Abhängigkeit von dem Signal des Gurtkraftsensors 3 die Regelung der auf das Objekt oder die Person aufgebrachten Gurtkraft.

Alternativ ist es möglich, dass der Gurtschlosssensor beziehungsweise die Gurtkraftregelung entfallen. Kern des Verfahrens beziehungsweise der erfindungsgemäßen Vorrichtung ist die Ansteuerung des Gurtes in Abhängigkeit von der erkannten Insassenklasse.

## Patentansprüche

1. Vorrichtung zur Ansteuerung von einem reversiblen Rückhaltemittel (2), wobei die Vorrichtung mit einer Innenraumsensierung (4) verbindbar ist und ein erstes Signal von der Innenraumsensierung (4) bei der Ansteuerung des reversiblen Rückhaltemittel (2) berücksichtigt, **dadurch gekennzeichnet, dass**, wenn das erste Signal einen Kindersitz anzeigt, ein Gurtstraffer als reversibles Rückhaltemittel gezielt betätigt wird, um den Kindersitz richtig zu gurten und im Fahrzeug zu fixieren.

2. Vorrichtung nach Anspruch 1, **dadurch gekennzeichnet, dass** die Vorrichtung mit einer Umfeldsensierung verbindbar ist und ein zweites Signal von der Umfeldsensierung bei der Ansteuerung des reversiblen Rückhaltemittels berücksichtigt.

3. Vorrichtung nach Anspruch 1, **dadurch gekennzeichnet, dass** die Innenraumsensierung (4) das erste Signal als Insassenklasse bildet.

4. Vorrichtung nach Anspruch 1, 2 oder 3, **dadurch gekennzeichnet, dass** die Vorrichtung mit einem Gurtkraftsensor (3) verbindbar ist und ein drittes Signal von dem Gurtkraftsensor (3) bei der Ansteuerung berücksichtigt.

5. Vorrichtung nach Anspruch 1, 2, 3 oder 4, **dadurch gekennzeichnet, dass** die Vorrichtung mit einem Gurtschlosssensor (5) verbindbar ist und in Abhängigkeit von einem vierten Signal von dem Gurtschlosssensor (5) entscheidet, ob das reversible Rückhaltemittel angesteuert wird oder eine Anzeige (7) aktiviert wird.

## Claims

1. Device for triggering a reversible restraining means (2), the device being able to be connected to a passenger compartment sensing system (4) and taking into account a first signal from the passenger compartment sensing system (4) when triggering the reversible restraining means (2), **characterized in that**, if the first signal indicates a child's seat, a seat-belt tensioner is deliberately actuated as the reversible restraining means in order to strap the child's seat correctly and fix it in the vehicle.

2. Device according to Claim 1, **characterized in that** the device can be connected to a system for sensing the surroundings and takes into account a second signal from the system for sensing the surroundings when triggering the reversible restraining means.

3. Device according to Claim 1, **characterized in that** the passenger compartment sensing system (4) forms the first signal as a vehicle occupant class.

4. Device according to Claim 1, 2 or 3, **characterized in that** the device can be connected to a belt force sensor (3) and takes into account a third signal from the belt force sensor (3) during triggering.

5. Device according to Claim 1, 2, 3 or 4, **characterized in that** the device can be connected to a belt lock sensor (5) and decides, on the basis of a fourth signal from the belt lock sensor (5), whether the reversible restraining means is triggered or a display (7) is activated.

## Revendications

1. Dispositif de commande d'un moyen de retenue réversible (2), le dispositif pouvant être relié à un moyen de détection d'habitacle (4) en tenant compte d'un premier signal venant des moyen de détection d'habitacle (4) pour la commande du moyen de retenue réversible (2),
**caractérisé en ce que**
lorsque le premier signal indique un siège pour enfant, le tendeur de courroie est actionné de manière intentionnelle comme moyen de retenue réversible pour ceinturer correctement le siège pour enfant et le bloquer dans le véhicule.

2. Dispositif selon la revendication 1,
**caractérisé en ce qu'**
il peut être relié à un moyen de détection d'environnement et il tient compte d'un second signal du moyen de détection de champ environnement pour commander le moyen de retenue réversible.

3. Dispositif selon la revendication 1,
**caractérisé en ce que**
le moyen de détection de l'habitacle (4) forme le premier signal comme classe d'occupant.

4. Dispositif selon les revendications 1, 2 ou 3,
**caractérisé en ce que**
le dispositif est relié à un capteur de force de ceinture (3) et pour la commande il tient compte d'un troisième signal venant d'un capteur de force de ceinture (3).

5. Dispositif selon les revendications 1, 2, 3 ou 4,
**caractérisé en ce qu'**
il est relié à un capteur de serrure de ceinture (5) et décide en fonction d'un quatrième signal venant du capteur de serrure de ceinture (5) s'il commande le moyen de retenue réversible ou active un moyen indicateur (7).
